# DEMANDE DE BREVET EUROPEEN

(11) **EP 4 840 694 A1**
(43) Date de publication de la demande: **18.11.2026**
(21) Numéro de dépôt: 26177022.6
(22) Date de dépôt: 06.05.2026
(51) Int. Cl.: B60N 2/58, B60N 2/60, B60N 2/70

(54) **MATELASSURE DE GARNISSAGE DE SIÈGE DE VÉHICULE AUTOMOBILE**

(30) Priorité: 16.05.2025 FR 2505275
(71) Demandeur: Tesca Covering Materials Services, 92800 Puteaux (FR)
(72) Inventeur: PERIANES, Sergio, 92800 Puteaux (FR)
(74) Mandataire: Sayettat, Julien Christian

(57) **Abrégé**

L'invention concerne une matelassure (1) de garnissage de siège de véhicule automobile, ladite matelassure comprenant un bloc (2), une coiffe (3) comprenant au moins une partie tricotée (4) et au moins un profilé (7) de fixation fixé par couture (8) sur une face d'envers (5), ladite face d'envers présentant un bourrelet (9) s'étendant le long dudit profilé, ledit bourrelet étant issu de tricotage de ladite partie tricotée, la face d'aspect (6) étant exempte de marquage en relief en regard dudit bourrelet, ladite couture étant enfouie au sein dudit bourrelet sans être saillante de ladite face d'aspect, de manière à former une couture cachée.

## Description

L'invention concerne une matelassure de garnissage de siège de véhicule automobile.

Il est connu de réaliser une matelassure de garnissage de siège de véhicule automobile, ladite matelassure comprenant :
- un bloc de rembourrage en matériau élastiquement compressible,
- une coiffe de revêtement dudit bloc comprenant au moins une partie tricotée, ladite partie présentant une face d'envers tournée vers ledit bloc et une face d'aspect tournée vers l'extérieur de ladite matelassure,
- au moins un profilé en matériau plastique extrudé de fixation de ladite coiffe sur ledit bloc, ledit profilé étant fixé par couture sur ladite face d'envers.

Un tel profilé peut notamment être fixé dans une zone de la coiffe présentant une couture d'association de différents éléments de coiffe entre eux, ladite couture permettant de réaliser en outre la fixation du profilé sur ladite coiffe.

Cependant, il peut être nécessaire de fixer le profilé par couture hors d'une telle zone d'association des éléments de coiffe.

Afin que la coiffe présente une esthétique avantageuse, on peut prévoir de réaliser une couture non saillante de la face d'aspect, le fil de couture restant enfoui dans l'épaisseur de la partie tricotée, de manière à former une couture cachée qui soit invisible de l'extérieur.

Cependant, une telle couture cachée n'est faisable que si la partie tricotée présente une épaisseur suffisante.

Il en résulte que, dans le cas où la partie tricotée présente une épaisseur trop faible, une telle couture cachée ne peut être réalisée.

L'invention a pour but de proposer un agencement permettant d'y remédier.

A cet effet, l'invention propose une matelassure de garnissage de siège de véhicule automobile, ladite matelassure comprenant :
- un bloc de rembourrage en matériau élastiquement compressible,
- une coiffe de revêtement dudit bloc comprenant au moins une partie tricotée, ladite partie présentant une face d'envers tournée vers ledit bloc et une face d'aspect tournée vers l'extérieur de ladite matelassure,
- au moins un profilé en matériau plastique extrudé de fixation de ladite coiffe sur ledit bloc, ledit profilé étant fixé par couture sur ladite face d'envers,
sachant que :
- ladite face d'envers présente un bourrelet s'étendant le long dudit profilé, de sorte que ladite partie tricotée présente une surépaisseur formée par ledit bourrelet, ledit bourrelet étant issu de tricotage de ladite partie tricotée, ladite face d'aspect étant exempte de marquage en relief en regard dudit bourrelet,
- ladite couture est enfouie au sein dudit bourrelet sans être saillante de ladite face d'aspect, de manière à former une couture cachée.

Avec l'agencement proposé, la surépaisseur conférée par le bourrelet à la partie tricotée permet de réaliser la couture cachée attendue, avec l'esthétique qui en résulte pour la coiffe sur laquelle on ne décèle pas l'emplacement du profilé.

En outre, le fait que le bourrelet soit issu de tricotage de la partie tricotée permet de le réaliser de façon particulièrement simple, ceci sans avoir à ajouter un élément séparé pour obtenir ledit bourrelet.

En outre, la face d'aspect étant exempte de bourrelet, on optimise le masquage du profilé.

D'autres particularités et avantages de l'invention apparaîtront dans la description qui suit, faite en référence aux figures jointes, dans lesquelles :

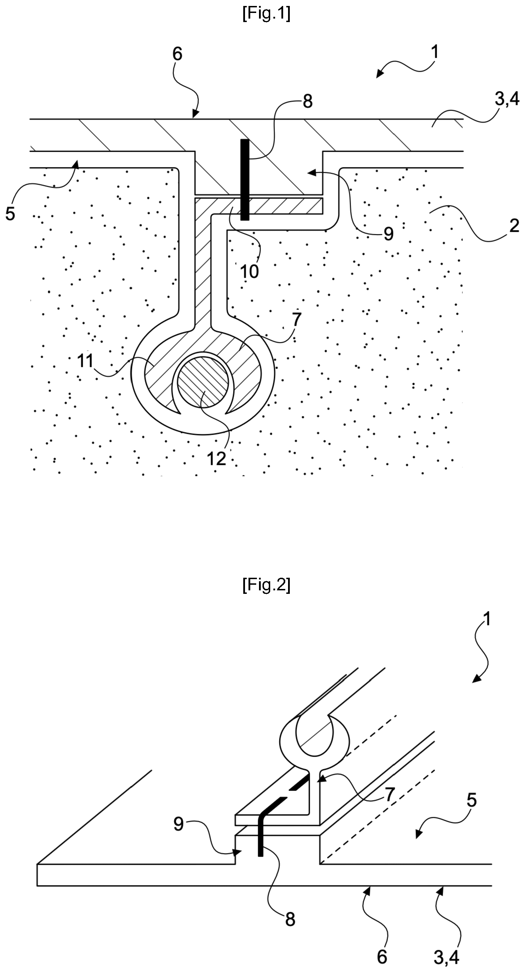

[Fig.1] est une vue schématique en coupe partielle d'une matelassure selon une réalisation,
[Fig.2] est une vue schématique en perspective partielle et en coupe d'une coiffe pourvue d'un profilé de la matelassure représentée en figure 1.

En référence aux figures, on décrit une matelassure 1 de garnissage de siège de véhicule automobile, ladite matelassure comprenant :
- un bloc 2 de rembourrage en matériau élastiquement compressible - notamment en mousse de polyuréthanne -,
- une coiffe 3 de revêtement dudit bloc comprenant au moins une partie tricotée 4, ladite partie présentant une face d'envers 5 tournée vers ledit bloc et une face d'aspect 6 tournée vers l'extérieur de ladite matelassure,
- au moins un profilé 7 en matériau plastique extrudé de fixation de ladite coiffe sur ledit bloc, ledit profilé étant fixé par couture 8 sur ladite face d'envers,
sachant que :
- ladite face d'envers présente un bourrelet 9 s'étendant le long dudit profilé, de sorte que ladite partie tricotée présente une surépaisseur formée par ledit bourrelet, ledit bourrelet étant issu de tricotage de ladite partie tricotée, ladite face d'aspect étant exempte de marquage en relief en regard dudit bourrelet,
- ladite couture est enfouie au sein dudit bourrelet sans être saillante de ladite face d'aspect, de manière à former une couture cachée.

Selon une réalisation, la coiffe 3 présente, à distance du bourrelet 9, une épaisseur - mesurée selon la norme ISO 5084:1996 - inférieure à 2 mm, ce qui ne permet pas de réaliser une couture cachée 8.

Selon une réalisation, la coiffe 3 présente, en regard du bourrelet 9, une épaisseur - mesurée selon la norme ISO 5084:1996 - supérieure à 3 mm, de manière à permettre la réalisation de la couture cachée 8.

Selon une réalisation, le bourrelet 9 présente une épaisseur généralement constante, de manière à se présenter sous une forme générale de parallélépipède allongé, ce qui permet de garantir la réalisation de la couture cachée 8 même en cas de décalage du positionnement de la coiffe 3 par rapport à sa position nominale.

Selon la réalisation représentée, le profilé 7 présente un pied de couture 10 au travers duquel est réalisé la couture 8 et une partie d'ancrage 11 s'ancrant sur un moyen de réception 12 solidaire du bloc 2 de rembourrage.

Selon la réalisation représentée, la partie d'ancrage 11 présente une section en forme générale de Ω, le moyen de réception 12 étant sous forme de fil métallique - qui peut notamment être fixé au bloc 2 de rembourrage par surmoulage quand ledit bloc est en mousse moulée - s'emboitant dans ladite partie d'ancrage.

## Revendications

1. Matelassure (1) de garnissage de siège de véhicule automobile, ladite matelassure comprenant :
• un bloc (2) de rembourrage en matériau élastiquement compressible,
• une coiffe (3) de revêtement dudit bloc comprenant au moins une partie tricotée (4), ladite partie présentant une face d'envers (5) tournée vers ledit bloc et une face d'aspect (6) tournée vers l'extérieur de ladite matelassure,
• au moins un profilé (7) en matériau plastique extrudé de fixation de ladite coiffe sur ledit bloc, ledit profilé étant fixé par couture (8) sur ladite face d'envers,
ladite matelassure étant **caractérisée en ce que** :
• ladite face d'envers présente un bourrelet (9) s'étendant le long dudit profilé, de sorte que ladite partie tricotée présente une surépaisseur formée par ledit bourrelet, ledit bourrelet étant issu de tricotage de ladite partie tricotée, ladite face d'aspect étant exempte de marquage en relief en regard dudit bourrelet,
• ladite couture est enfouie au sein dudit bourrelet sans être saillante de ladite face d'aspect, de manière à former une couture cachée.

2. Matelassure (1) selon la revendication 1, **caractérisée en ce que** la coiffe (3) présente, à distance du bourrelet (9), une épaisseur inférieure à 2 mm.

3. Matelassure (1) selon l'une des revendications précédentes, **caractérisée en ce que** la coiffe (3) présente, en regard du bourrelet (9), une épaisseur supérieure à 3 mm, de manière à permettre la réalisation de la couture cachée (8).

4. Matelassure (1) selon l'une quelconque des revendications précédentes, **caractérisée en ce que** le bourrelet (9) présente une épaisseur généralement constante, de manière à se présenter sous une forme générale de parallélépipède allongé.

5. Matelassure (1) selon l'une quelconque des revendications précédentes, **caractérisée en ce que** le profilé (7) présente un pied de couture (10) au travers duquel est réalisé la couture (8) et une partie d'ancrage (11) s'ancrant sur un moyen de réception (12) solidaire du bloc de rembourrage.

6. Matelassure (1) selon la revendication 5, **caractérisée en ce que** la partie d'ancrage (11) présente une section en forme générale de Ω, le moyen de réception (12) étant sous forme de fil métallique s'emboitant dans ladite partie d'ancrage.
